# EUROPEAN PATENT SPECIFICATION

(11) **EP 0 890 474 B1**
(45) Date of publication and mention of the grant of the patent: **25.09.2002**
(21) Application number: 97830346.9
(22) Date of filing: 11.07.1997
(51) Int. Cl.: B60P 1/43

(54) **Tiltable ramp for a load floor of a motor vehicle**
Kippbare Rampe für die Ladefläche eines Kraftfahrzeugs
Rampe basculante pour la plateforme de chargement d'un véhicule à moteur

(43) Date of publication of application: 13.01.1999
(73) Proprietor: Modulcar S.r.l., 41100 Modena (IT)
(72) Inventor: Baraldi, Giugliano, 41100 Modena (IT); Camellini, Giancarlo, 41100 Modena (IT)
(74) Representative: Gotra, Stefano

(56) References cited:
- EP-A- 0 504 958
- DE-U- 1 925 442
- GB-A- 2 150 526
- US-A- 3 580 404

## Description

The invention is especially useful in motor vehicles for goods transport, and has the aim of providing a ramp so that goods can be raised from the ground, which is usually lower than the load floor, and loaded and unloaded onto the load floor.

The prior art contains ramps for the above purpose, which are usually constituted by one or more extended plates which when needed are rested against the access edge to the load floor of the lorry, thus achieving inclined ramps on which loading trucks can be pushed up or down to load the lorry.

GB - A - 2 150 526 which represents the closest prior art discloses a device for facilitating access to a load floor of a motor vehicle comprising a deployable ramp for manoeuvring items over a step or steps at an entrance, for example of a vehicle or a building, which is deployable between a stowed position and a deployed position.

In the stowed position the ramp is vertical on a horizontal axis which itself is pivotable about a vertical axis fixed at one side of the entrance so that the vertical ramp can be swung away of the entrance. The ramp is folded in the middle about a further horizontal axis.

EP - A- 0 504 958 discloses an apparatus for van-type vehicles which acts as an inclined ramp for goods loading and unloading. This ramp is folded in the middle about a horizontal axis.

US - A - 3,580,404 shows a loading ramp for trailers which is hinged about a horizontal axis.

DE - 1 925 442 U discloses a ramp which is pivotable about a horizontal axis.

The above ramps are however susceptible to drawbacks.

Firstly, resting them on the edge of the load floor can be a difficult and laborious operation.

Secondly, storing them, usually inside the van of the lorry, is a problem.

Thirdly, during use they can become unstable and wobbly.

The present invention, which relates to a device for facilitating access to a load floor according to all features of the preamble of present indipendent claim 1, obviates the above-mentioned drawbacks in the prior art.

An advantage of the invention is that it provides a device for granting access to the load floor of a lorry, which device can be moved easily and quickly into a use configuration.

A further advantage is that the invention enables the device to be stored inside the lorry in such a way that little space is taken up, so that the van part of the lorry can better be exploited for transport of goods.

A still further advantage is that the device is constructively simple and economical.

Further characteristics and advantages of the present invention will better emerge from the detailed description that follows of a preferred but non-exclusive embodiment of the invention, illustrated purely by way of nonlimiting example in the accompanying figures of the drawings, in which:

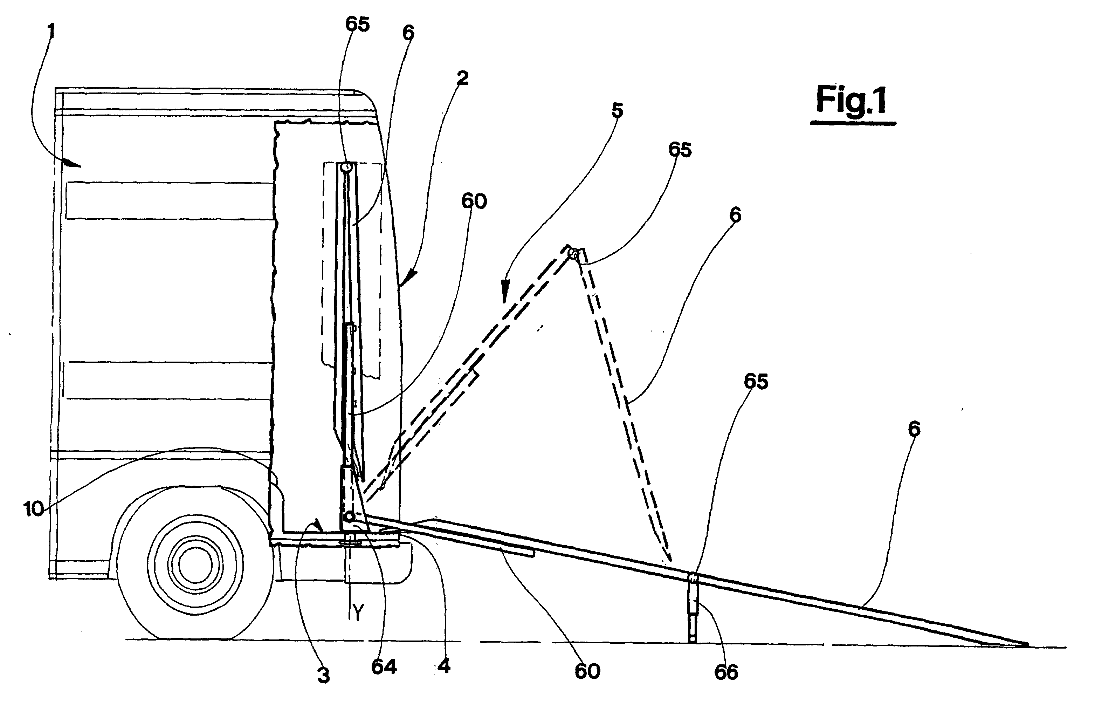

figure 1 is a schematic view from above of the device of the invention, in various operative configurations;
figure 2 is a plan view from above of figure 1, partially cut away;
figure 3 is a view from the right of figure 1.

With reference to the above figures, 1 denotes a motor vehicle, constituted by a lorry for the transport of goods, only the back part of which is shown in the figure. The vehicle 1 exhibits an aperture 2 at its back for access to a loading van. This aperture 2 can be closed by doors (not illustrated). The van is provided with a horizontal load floor 3, posteriorly delimited by an edge 4, raised with respect to the floor, through which access can be gained to the van.

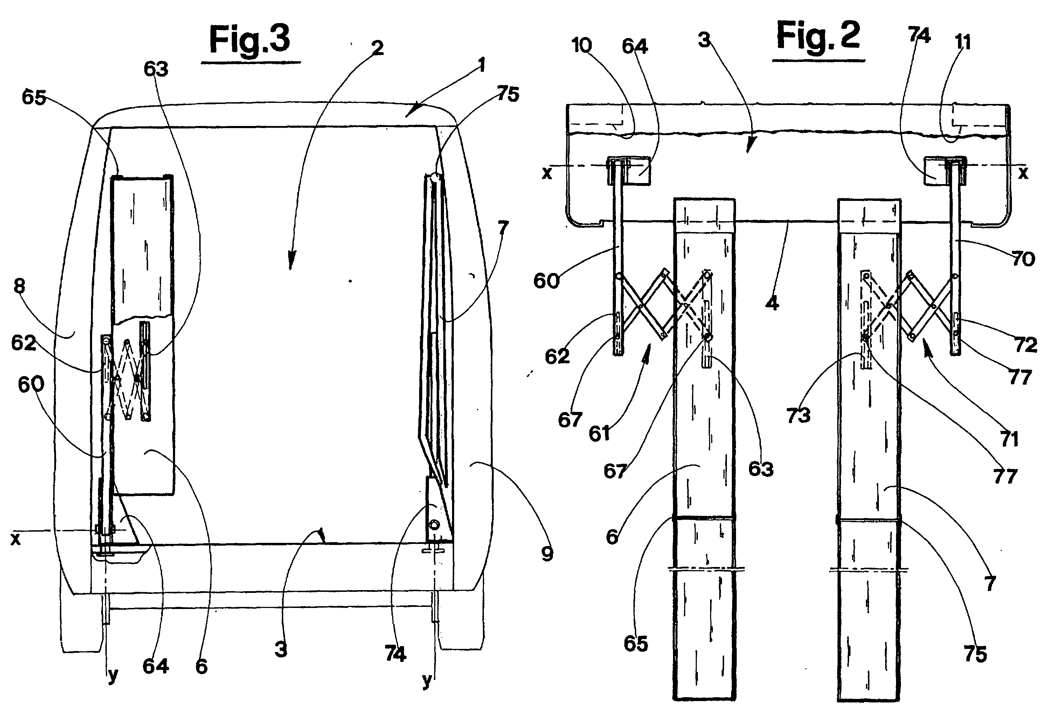

The number 5 denotes in its entirety a device for facilitating access to the loading floor 3. This device 5 comprises at least one access ramp destined in use to be located in an inclined configuration, in which it can be used as a ramp for access over the edge 4 of the floor 3 to the floor itself. In the illustrated embodiment, the device comprises two ramps 6 and 7, made of flat elongate and narrow plates, which in the use configuration (figure 2) are parallel and distanced one from another and can be arranged in such a way as to enable a loading truck with wheels to be pushed up and down them.

Each access ramp 6 and 7 is constrained to the loading floor 3 in such a way as to be able selectively to assume the abovementioned inclined use configuration and a rest configuration (figure 3), wherein each ramp is substantially perpendicular to the loading floor 3 and is located one ramp on each side of the loading floor access edge 4. In other words the two ramps 6 and 7, in the rest configuration, are at the two opposite sides of the access edge 4. Preferably, the ramps 6 and 7, in the non-use configuration, are pushed against the two opposite sides 8 and 9 of the vehicle 1, that is against the walls which laterally define the vehicle 1 load van, as illustrated for the right ramp in figure 3.

Each access ramp 6 and 7 is connected to a respective support element 60 and 70 situated at a respective side of the access edge 4, and is able to move in a parallel direction to said edge 4, or has at least a component in that direction.

This connection between an access ramp 6 and 7 and the respective support element 60 and 70 is preferably realised using a variable-configuration hinged rod system 61 and 71, which in the illustrated example is of the pantograph type, with two rod pairs of equal length, crossed over and reciprocally hinged at the centre and the ends. These rod systems 61 and 71 can be extended and shortened in a parallel direction to the access edge 4 of the loading floor. Each hinged rod system 61, 71 comprises a rod having an end which is stably hinged to the respective ramp 6 and 7 and another rod having an end which is slidably coupled to the ramp 6, 7.

Two slide guides 62, 63 and 72, 73 are provided for each hinged system 61 and 71. One guide 62, 72, is predisposed on the support element 60, 70 and the other guide is predisposed on the ramp 6, 7. Two respective ends of rod of the system can slide along the above-mentioned guides. Removable lock means are provided for said rod ends on the respective guides.

The guides are constituted in the example by two parallel slots which are perpendicular to the extending and shortening direction of the respective hinged rod system, there being inserted in each guide a pivot projecting from a rod in the hinged system. When the configuration of the hinged system 61, 71 is changed, by extension or shortening, the pivots run along the respective slots. The above-mentioned lock means are constituted in the example by normal clamps 67 and 77, for example screw-type clamps, which can be tightened and loosened by hand.

Each support element 60, 70, which in the illustrated embodiment are bars, is constrained to the load floor 3 in such a way as to be able to rotate about a rotation axis x which is more or less parallel to the access edge 4 to the load floor. In particular, each support element 60, 70, is hinged to a respective base 64, 74, constrained to the load floor 3. Each base 64, 74, is rotatably mounted on the load floor and can rotate about a respective axis y which is substantially perpendicular to the load floor itself and which is therefore, in this embodiment, vertical.

The distance between the two ramps 6, 7 when they are in the inclined use configuration, can be adjusted thanks to the configuration versatility of the hinged systems 61, 71, which connect the ramps themselves to the support elements 60, 70. These hinged systems give the ramps a considerable stability in use, that is, during transit of trucks or persons loading the van.

Each access ramp 6, 7 is hinged at at least one hinge point 65, 75, so that the ramp itself can be folded on itself into a folded configuration (figure 3) in which its length is inferior to that of the height of the van. Thus each ramp 6, 7 when folded can be stored upright in the van.

Each ramp 6, 7 is also provided with at least one intermediate element 66 for resting the ramp on the ground, constituted for example by a rod which can be stored flat against the ramp and is telescopic, so that it can be height-adjusted.

In the illustrated example, the intermediate element 66 is situated at the hinge point 65 of the ramp.

In the inclined use configuration, the two ramps 6, 7 are rested on the access edge 4 of the loading floor by one end and rest on the ground at the other end.

Passage of a person or vehicle on the ramp places no stress on the hinged rod systems 61, 71, nor on the support elements 60, 70, which therefore do not have to be structured and sized in order to cope with heavy weights.

It has been noted that the ramps 6, 7 are particularly stable and secure, and that there is a considerable reduction in vibrations and wobbling when loads are transited up and down, in comparison to ramps which are simply rested on the edge of the load floor.

The easy and rapid rest configuration is reached following the procedure as described below. The ramps 6 and 7 are brought side by side with the respective support elements 60, 70, which are then raised into an erect position by rotating them on the pivots connecting them to the respective bases 64, 75, after which the bases 64, 74 are rotated with respect to the load floor about vertical rotation axes y up until they are side-by-side with the two sides 8 and 9 of the van. In the rest configuration the ramps 6, 7 are located in the empty space which usually divides the back end of the van from the wheel guards (schematically represented in the figures and denoted 10 and 11) which project internally of the van.

In the illustrated device the above-described displacements from the use configuration to the rest configuration are done by hand. Motorised means could be installed instead for this operation.

## Claims

1. A device for facilitating access to a load floor (3) of a motor vehicle (1), comprising at least one access ramp (6, 7) destined during use to be located in an inclined configuration in which it permits ascent and descent to and from an edge (4) of said load floor (3), where the access ramp (6, 7) is constrained to the load floor (3) in such a way that said ramp (6, 7) can selectively assume said inclined use configuration and a rest configuration in which it is substantially perpendicular to the load floor (3) and is located at a side of said edge (4);
said access ramp (6, 7) being connected to a support element (60, 70) situated at a side of said edge (4) of the load floor (3) and being constrained to the load floor (3) in such a way as to be able to rotate about a rotation axis (x) which is parallel to said edge (4);
said access ramp (6, 7) being furthermore constrained to a respective support element (60, 70) in such a way as to be able to be displaced, with displacement having at least one component which is parallel to said edge (4) of the loading floor (3);
**characterised in that** each access ramp (6, 7) is connected to a respective support element (60, 70) by means of a variable-configuration hinged rod system (61, 71).

2. The device of claim 1, **characterised in that** said hinged rod system (61, 71) is of a pantograph type.

3. The device of claim 1 or 2, **characterised in that** said hinged rod system (61, 71) comprises a rod having one end stably hinged to a respective ramp (6, 7) and another rod having an end which is slidable in a guide (63, 73) which is made solid to the ramp (6, 7).

4. The device of any one of the preceding claims, **characterised in that** said support element (60, 70) is hinged to a base (64, 74) which base is rotatably mounted on the load floor (3) and is rotatable about an axis (y) which is perpendicular to the load floor (3).

5. The device of any one of the preceding claims, **characterised in that** it comprises two access ramps (6,7) which in a use configuration are parallel one to another and which in a rest configuration are located at two opposite sides of said edge (4).

6. The device of claim 5, **characterised in that** a reciprocal distance between said ramps (6, 7) in the use configuration is adjustable.

7. The device of any one of the preceding claims, **characterised in that** each ramp (6, 7) is foldable at one point (65, 75) at least.

8. The device of any one of the preceding claims, **characterised in that** each ramp (6, 7) is provided with at least one intermediate element (66) for resting on the ground.

9. The device of claim 7 or 8, **characterised in that** said intermediate element (66) is situated at said folding point (65).

## Patentansprüche

1. Vorrichtung zum Erleichtern des Zugangs zu einer Ladefläche (3) von einem Motorfahrzeug (1), enthaltend wenigstens eine Zugangsrampe (6, 7), die dazu bestimmt ist, während der Benutzung in einer schrägen Stellung angeordnet zu werden, in welcher sie es erlaubt, bis zu einer Kante (4) der genannten Ladefläche (3) herauf und von dieser wieder herunter zu gelangen, bei welcher die Zugangsrampe (6, 7) auf solche Weise an der Ladefläche (3) gehalten ist, dass die genannte Rampe (6, 7) wahlweise die genannte schräge Benutzungsposition und eine Ruheposition einnehmen kann, in welcher sie im wesentlichen lotrecht zu der Ladefläche (3) und an einer Seite der genannten Kante (4) angeordnet ist; wobei die genannte Zugangsrampe (6, 7) an ein Trägerelement (60, 70) angeschlossen ist, welches sich an einer Seite der genannten Kante (4) der Ladefläche (3) befindet und auf solche Weise an der Ladefläche (3) gehalten wird, dass es in der Lage ist, sich um eine Achse (x) zu drehen, die parallel zu der genannten Kante (4) verläuft; und wobei die genannte Zugangsrampe (6, 7) ausserdem auf solche Weise an einem jeweiligen Trägerelement (60, 70) gehalten ist, dass sie verschoben werden kann, wobei sie zur Verschiebung wenigstens ein Bestandteil aufweist, welches parallel zu der genannten Kante (4) der Ladefläche (3) verläuft; **dadurch gekennzeichnet, dass** jede Zugangsrampe (6, 7) mit Hilfe einen Gelenkstangensystems (61, 71) mit veränderbarer Konfiguration an das jeweilige Trägerelement (60, 70) angeschlossen ist.

2. Vorrichtung nach Patentanspruch 1, **dadurch gekennzeichnet, dass** das genannte Gelenkstangensystem (61, 71) vom Typ eines Pantografen ist.

3. Vorrichtung nach Patentanspruch 1 oder 2, **dadurch gekennzeichnet, dass** das genannte Gelenkstangensystem (61, 71) eine Stange enthält, welche ein Ende stabil an eine jeweilige Rampe (6, 7) angelenkt hat, und eine andere Stange mit einem Ende, welches gleitbar in einer Führung (63, 73) liegt, die fest mit der Rampe (6, 7) verbunden ist.

4. Vorrichtung nach einem beliebigen der vorstehenden Patentansprüche, **dadurch gekennzeichnet, dass** das genannte Trägerelement (60, 70) an eine Basis (64, 74) angelenkt ist, welche Basis drehbar an der Ladefläche (3) montiert ist und sich um eine Achse (y) drehen kann, die lotrecht zu der Ladefläche (3) verläuft.

5. Vorrichtung nach einem beliebigen der vorstehenden Patentansprüche, **dadurch gekennzeichnet, dass** sie wenigstens zwei Zugangsrampen (6, 7) enthält, welche in der Benutzungsposition parallel zueinander verlaufen, und welche in einer Ruheposition an zwei entgegengesetzten Seiten der genannten Kante (4) angeordnet sind.

6. Vorrichtung nach Patentanspruch 5, **dadurch gekennzeichnet, dass** der gegenseitige Abstand zwischen den genannten Rampen (6, 7) in der Benutzungsposition einstellbar ist.

7. Vorrichtung nach einem beliebigen der vorstehenden Patentansprüche, **dadurch gekennzeichnet, dass** jede Rampe (6, 7) wenigstens an einem Punkt (65, 75) als kippbar ausgelegt ist.

8. Vorrichtung nach einem beliebigen der vorstehenden Patentansprüche, **dadurch gekennzeichnet, dass** jede Rampe (6, 7) mit wenigstens einem Zwischenelement (66) zum Aufliegen auf dem Boden versehen ist.

9. Vorrichtung nach Patentanspruch 7 oder 8, **dadurch gekennzeichnet, dass** das genannte Zwischenelement (66) an dem genannten kippbaren Punkt (65) angeordnet ist.

## Revendications

1. Dispositif pour faciliter l'accès à une plateforme de chargement (3) d'un véhicule à moteur (1), comprenant au moins une rampe d'accès (6, 7) destinée pendant l'utilisation à être disposée dans une configuration inclinée dans laquelle elle permet la montée et la descente sur et depuis un bord (4) de ladite plateforme de chargement (3), dans lequel la rampe d'accès (6, 7) est fixée à la plateforme de chargement (3) de manière à ce que ladite rampe (6, 7) peut sélectivement assumer ladite configuration d'utilisation inclinée et une configuration de repos dans laquelle elle est substantiellement perpendiculaire à la plateforme de chargement (3) et est disposée sur un côté dudit bord (4); ladite rampe d'accès (6, 7) étant reliée à un élément de support (60, 70) situé sur un côté dudit bord (4) de la plateforme de chargement (3) et étant fixé à la plateforme de chargement (3) de manière à pouvoir pivoter autour d'un axe de rotation (x) parallèle audit bord (4); ladite rampe d'accès (6, 7) étant de plus fixée à un respectif élément de support (60, 70) de manière à pouvoir être déplacée, avec des déplacements ayant au moins une composante parallèle audit bord (4) de la plateforme de chargement (3);
**caractérisé en ce que** chaque rampe d'accès (6, 7) est reliée à un respectif élément de support (60, 70) au moyen d'un système articulé de tiges à configuration variable (61, 71).

2. Le dispositif de la revendication 1, **caractérisé en ce que** ledit système articulé de tiges (61, 71) est de type à pantographe.

3. Le dispositif de la revendication 1 ou 2, **caractérisé en ce que** ledit système articulé de tiges (61, 71) comprend une tige ayant une extrémité solidement articulée à une respective rampe (6, 7) et une autre tige ayant une extrémité coulissante dans un guide (63, 73) solidaire de la rampe (6, 7).

4. Le dispositif de n'importe laquelle des revendications précédentes, **caractérisé en ce que** ledit élément de support (60, 70) est articulé sur une base (64, 74), laquelle base est montée en pivot sur la plateforme de chargement (3) et est rotatif autour d'un axe (y) perpendiculaire à la plateforme de chargement (3).

5. Le dispositif de n'importe laquelle des revendications précédentes, **caractérisé en ce qu'**il comprend deux rampes d'accès (6, 7) qui, dans une configuration d'utilisation, sont parallèles l'une à l'autre et qui, dans une configuration de repos, sont situées en deux côtés opposés dudit bord (4).

6. Le dispositif de la revendication 5, **caractérisé en ce qu'**est réglable une distance réciproque entre lesdites rampes (6, 7) dans une configuration d'utilisation.

7. Le dispositif de n'importe laquelle des revendications précédentes, **caractérisé en ce que** chaque rampe (6, 7) est pliable en un point (65, 75) au moins.

8. Le dispositif de n'importe laquelle des revendications précédentes, **caractérisé en ce que** chaque rampe (6, 7) est pourvue d'au moins un élément intermédiaire (66) pour le repos au sol.

9. Le dispositif de la revendication 7 ou 8, **caractérisé en ce que** ledit élément intermédiaire (66) est situé en correspondance dudit point pliable (65).
